# EUROPÄISCHE PATENTSCHRIFT

(11) **EP 1 924 822 B1**
(45) Veröffentlichungstag und Bekanntmachung des Hinweises auf die Patenterteilung: **19.06.2019**
(21) Anmeldenummer: 06793062.8
(22) Anmeldetag: 29.08.2006
(51) Int. Cl.: G01C 19/5649

(54) **VERFAHREN ZUM BETRIEB EINES VIBRATIONSKREISELS UND SENSORANORDNUNG**
METHOD FOR OPERATING A VIBRATING GYROSCOPE AND SENSOR ARRANGEMENT
PROCEDE POUR FAIRE FONCTIONNER UN GYROSCOPE VIBRANT ET DISPOSITIF DE DETECTION

(30) Priorität: 12.09.2005 DE 102005043592
(43) Veröffentlichungstag der Anmeldung: 28.05.2008
(73) Patentinhaber: Continental Automotive GmbH, 30165 Hannover (DE)
(72) Erfinder: MAYER-WEGELIN, Raphael, 61381 Friedrichsdorf (DE); MORELL, Heinz-Werner, 67659 Kaiserslautern (DE)
(74) Vertreter: Brand, Markus
(86) Internationale Anmeldenummer: PCT/EP2006/065781
(87) Internationale Veröffentlichungsnummer: WO 2007/031402

(56) Entgegenhaltungen:
- EP-A- 1 600 732
- WO-A-2004/020948
- WO-A2-02/065055
- JP-A- 1 032 113
- JP-A- 9 218 040

## Beschreibung

Die Erfindung betrifft ein Verfahren zum Betrieb eines Vibrationskreisels und eine Sensoranordnung mit einem Vibrationskreisel, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird.

Beispielsweise aus EP 0 461 761 B1 sind Drehratensensoren bekannt geworden, bei welchen ein Vibrationskreisel in zwei gegenüber einer Hauptachse radial ausgerichteten Achsen angeregt wird, wozu ein primärer und ein sekundärer Regelkreis mit entsprechenden Wandlern an dem Vibrationskreisel vorgesehen sind. Werden derartige Drehratensensoren in Fahrzeugen zur Stabilisierung der Fahrzeugbewegung eingesetzt, ist eine Funktion des Drehratensensors unmittelbar nach Inbetriebsetzung des Fahrzeugs erforderlich. Diese wird jedoch durch das Einschwingverhalten des Regelkreises verzögert.

In der JP 01-032113 A und der nachveröffentlichten EP 1 600 732 A1 ist jeweils ein Vibrationskreisel gezeigt, bei dem der Resonator zu einer freien Schwingung angeregt wird. Die Frequenz der freien Schwingung wird gemessen und der Resonator anschließend mit dieser Frequenz angetrieben.

In der WO 2004/020948 A1 und der WO 2002/06505 A2 ist jeweils ein Vibrationskreisel mit einem Vibrationselement und einem Antriebselement zur Anregung des Vibrationselements gezeigt. Zur Ermittlung der Eigenfrequenz wird die Frequenz eines Signalgenerators von einem minimalen bis zu einem maximalen Wert verändert. Anschließend wird der Signalgenerator ausgeschaltet und die Eigenfrequenz des Vibrationselements ermittelt, indem die Frequenz einer sich gebildeten freien Schwingung des Vibrationselements gemessen wird.

Aufgabe der vorliegenden Erfindung ist es daher, das Einschwingen des Regelkreises zu beschleunigen. Diese Aufgabe wird erfindungsgemäß dadurch gelöst, dass nach dem Einschalten einer Sensoranordnung mit dem Vibrationskreisel die Frequenz des Erregersignals dadurch eingestellt wird, dass vor Zuführung des Erregersignals der Vibrationskreisel zu einer freien Schwingung angeregt wird, dass die Frequenz der freien Schwingung gemessen wird und dass das Erregersignal mit der gemessenen Frequenz dem Vibrationskreisel zugeführt wird. Zur Anregung des Vibrationskreisels von einem zur Anregung dienenden Signal wird mindestens ein vorgegebener Frequenzbereich durchfahren, wonach das Signal abgeschaltet wird und die Frequenz einer sich gebildeten freien Schwingung gemessen wird. Ein weiterer Frequenzbereich wird durchfahren, wenn sich keine freie Schwingung ausgebildet hat. Die Frequenzbereiche sind derart gewählt, dass sie eine zuvor in einem Abgleichprozess bei der Herstellung der Sensoranordnung gemessene und in einem Speicher abgelegte Eigenfrequenz einschließlich deren insbesondere durch Temperatureinflüsse oder Alterungserscheinungen bedingte Änderungen umfassen.

Durch eine geringe Dämpfung nach der Anregung wird erreicht, dass die mit einer e-Funktion abklingende freie Schwingung für eine Frequenzmessung lange genug zur Verfügung steht. Die Frequenzmessung kann beispielsweise als Messung der Periodendauer durch Zählen höherfrequenter Impulse ausgeführt sein.

Die Frequenzbereiche können derart gewählt sein, dass sie insgesamt alle möglichen Eigenfrequenzen des Vibrationskreisels umfassen.

Durch die Verwendung der zuvor gemessenen Eigenfrequenz einschließlich deren Änderungsbereichs kann die Suche nach der Eigenfrequenz sich auf einen kleineren Bereich beschränkt.

Um keine mögliche Eigenfrequenz bei der Suche auszulassen, kann gemäß einer anderen Ausgestaltung vorgesehen sein, dass sich die Frequenzbereiche überlappen.

Eine weitere Ausgestaltung der Erfindung besteht darin, dass der Frequenzbereich derart gewählt ist, dass er eine Eigenfrequenz des Vibrationskreisels umfasst, deren Wert aus einem gespeicherten Wert, dessen Temperaturabhängigkeit und der beim Einschalten gemessenen Temperatur berechnet wird. Der gespeicherte Wert ist derjenige Wert, der bei einer vorgegebenen Temperatur, beispielsweise 25 °C, während eines Abgleichverfahrens des Vibrationskreisels bzw. der den Vibrationskreisel enthaltenden Sensoranordnung gemessen und in einem nicht-flüchtigen Speicher abgelegt wird. Dabei kann vorzugsweise auch die Temperatur während des Abgleichverfahrens in dem Speicher abgelegt werden und gegebenenfalls die Temperaturabhängigkeit.

Eine erfindungsgemäße Sensoranordnung löst die Aufgabe durch Mittel, die ein schnelles Einschwingen des Regelkreises dadurch bewirken, dass nach dem Einschalten der Sensoranordnung die Frequenz des Erregersignals dadurch eingestellt wird, dass vor Zuführung des Erregersignals der Vibrationskreisel zu einer freien Schwingung angeregt wird, dass die Frequenz der freien Schwingung gemessen wird und dass das Erregersignal mit der gemessenen Frequenz dem Vibrationskreisel zugeführt wird. Zur Anregung des Vibrationskreisels von einem zur Anregung dienenden Signal wird mindestens ein vorgegebener Frequenzbereich durchfahren, wonach das Signal abgeschaltet wird und die Frequenz einer sich gebildeten freien Schwingung gemessen wird. Die Sensoranordnung ist so ausgebildet, dass ein weiterer Frequenzbereich durchfahren wird, wenn sich keine freie Schwingung ausgebildet hat. Die Frequenzbereiche sind derart gewählt, dass sie eine zuvor in einem Abgleichprozess bei der Herstellung der Sensoranordnung gemessene und in einem Speicher abgelegte Eigenfrequenz einschließlich deren insbesondere durch Temperatureinflüsse oder Alterungserscheinungen bedingte Änderungen umfassen.

Vorzugsweise ist bei der erfindungsgemäßen Sensoranordnung vorgesehen, dass die Mittel eine Frequenzmesseinrichtung, einen Mikrocontroller mit einem nicht-flüchtigen Speicher und einen Frequenz-Synthesierer umfassen.

Durch die in weiteren Unteransprüchen aufgeführten Maßnahmen sind weitere vorteilhafte Weiterbildungen und Verbesserungen der erfindungsgemäßen Sensoranordnung möglich.

Die Erfindung lässt zahlreiche Ausführungsformen zu. Mehrere davon sind schematisch in der Zeichnung anhand mehrerer Figuren dargestellt und nachfolgend beschrieben. Es zeigt:
Fig. 1 ein Blockschaltbild einer Sensoranordnung mit einem Vibrationskreisel mit den zur Durchführung des erfindungsgemäßen Verfahrens dienenden Elementen,
Fig. 2 eine schematische Darstellung von bei einem ersten Ausführungsbeispiel des erfindungsgemäßen Verfahrens vorgesehenen Frequenzbereichen,
Fig. 3 Frequenzbereiche beim zweiten Ausführungsbeispiel und
Fig. 4 Frequenzbereiche bei einem dritten Ausführungsbeispiel.

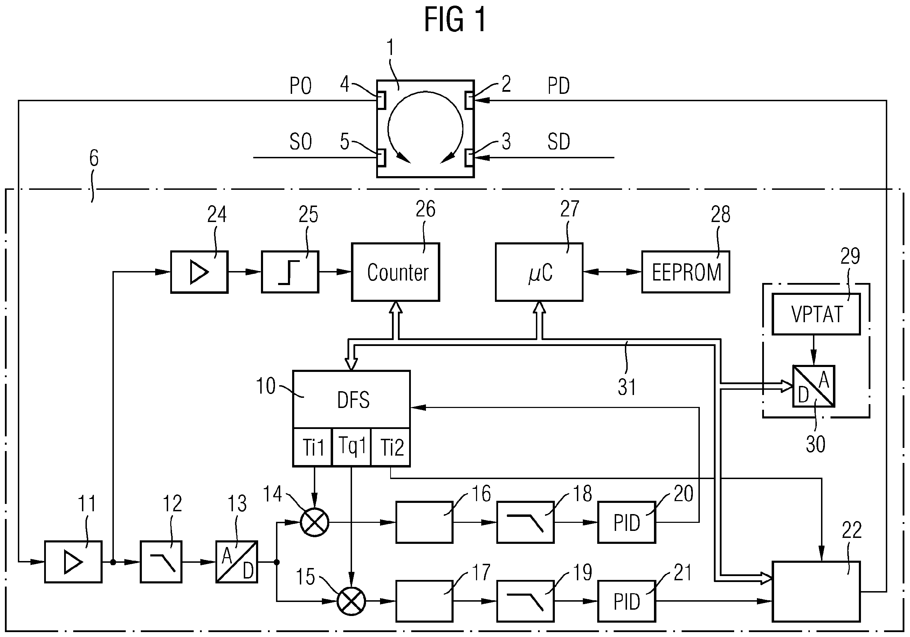

Die Sensoranordnung nach Fig. 1 sowie Teile davon sind zwar als Blockschaltbilder dargestellt. Dieses bedeutet jedoch nicht, dass die erfindungsgemäße Sensoranordnung auf eine Realisierung mit Hilfe von einzelnen den Blöcken entsprechenden Schaltungen beschränkt ist. Die erfindungsgemäße Sensoranordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen.

Fig. 1 zeigt ein Blockschaltbild einer Sensoranordnung mit einem Vibrationskreisel 1 mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein Filter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreises ist, der nicht dargestellt ist, da dessen Erläuterung zum Verständnis der Erfindung nicht erforderlich ist. Der primäre Regelkreis 6 dient zur Erregung von Schwingungen mit der Resonanzfrequenz des Vibrationskreisels von beispielsweise 14 kHz. Die Erregung erfolgt dabei in einer Achse des Vibrationskreisels, zu welcher die für den sekundären Regelkreis benutzte Schwingungsrichtung um 90° versetzt ist. Im nicht dargestellten sekundären Regelkreis wird das Signal SO in zwei Komponenten aufgespalten, von denen eine nach geeigneter Verarbeitung als der Drehrate proportionales Signal abnehmbar ist.

In beiden Regelkreisen erfolgt ein wesentlicher Teil der Signalverarbeitung digital. Die zur Signalverarbeitung erforderlichen Taktsignale werden in einem quarzgesteuerten digitalen Frequenz-Synthesierer 10 erzeugt, dessen Taktfrequenz im dargestellten Beispiel 14,5 MHz beträgt. Für die Anwendung des erfindungsgemäßen Verfahrens kommt im Wesentlichen der primäre Regelkreis in Frage, weshalb in Fig. 1 ein Ausführungsbeispiel für den primären Regelkreis dargestellt sind.

Der Regelkreis weist einen Verstärker 11 für das Ausgangssignal PO auf, an den sich ein Anti-Alias-Filter 12 und ein Analog/Digital-Wandler 13 anschließen. Mit Hilfe von Multiplizierern 14, 15, denen Träger Ti1 und Tq1 zugeführt werden, erfolgt eine Aufspaltung in eine Inphase-Komponente und eine Quadratur-Komponente. Beide Komponenten durchlaufen anschließend je ein (sinx/x)-Filter 16, 17 und ein Tiefpassfilter 18, 19. Der gefilterte Realteil wird einem PID-Regler 20 zugeführt, der den digitalen Frequenz-Synthesierer steuert, wodurch eine Phasenregelschaltung geschlossen wird, welche die richtige Phasenlage der Träger Ti1 und Tq1 bewirkt. Außerdem wird ein Träger Tq2 erzeugt, der in einer Schaltung 22 mit dem Ausgangssignal eines weiteren PID-Reglers 21 moduliert wird, der den tiefpassgefilterten Imaginärteil erhält. Das Ausgangssignal der Schaltung 22 wird dem Eingang 2 des Vibrationskreisels 1 als Erregersignal PD zugeführt. Anstelle der PID-Regler können je nach Voraussetzungen im Einzelnen auch andere Regler, beispielsweise PI-Regler, vorgesehen sein.

Zur Durchführung des erfindungsgemäßen Verfahrens ist ein weiterer Verstärker 24, ein Schmitt-Trigger 25 und ein Zähler 26 vorgesehen. Diese dienen als Frequenzmesseinrichtung. Ein Mikrocontroller 27 steuert die einzelnen Schritte des erfindungsgemäßen Verfahrens und hat Zugriff auf einen nicht-flüchtigen Speicher 28, der als EEPROM ausgebildet ist. Ferner wird für das erfindungsgemäße Verfahren ein bei vielen Sensorschaltungen ohnehin vorhandener Temperatursensor benutzt, der aus einem eigentlichen Sensor 29 und einem Analog/Digital-Wandler 30 besteht. Ein Bussystem 31 verbindet die aufgeführten Komponenten untereinander und mit dem digitalen Frequenz-Synthesierer 10 sowie mit der Schaltung 22.

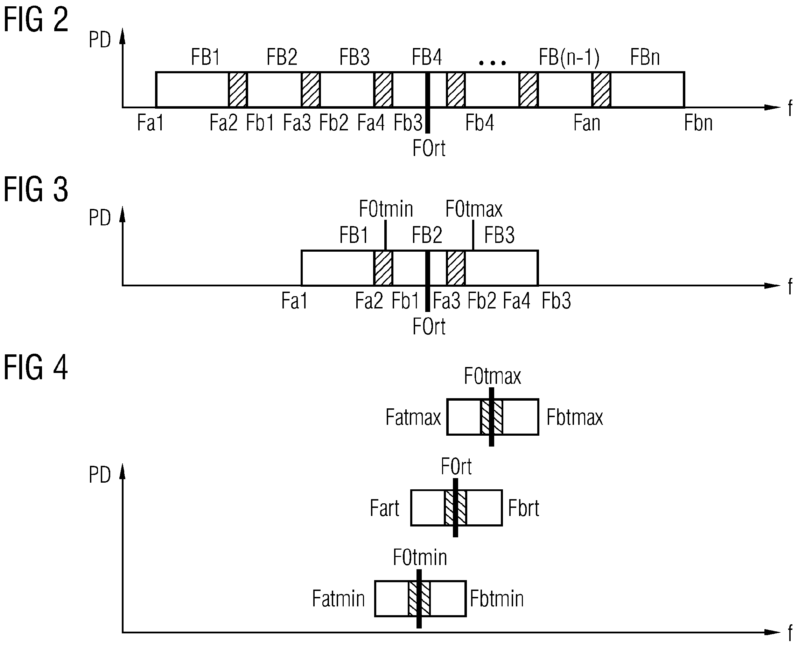

Zur Durchführung des erfindungsgemäßen Verfahrens steuert der Mikrocontroller 27 den Frequenz-Synthesierer 10 und die Schaltung 22 derart, dass die später im Zusammenhang mit den Figuren 2 bis 4 näher erläuterten Anregungssignale dem Eingang 2 des Vibrationskreisels 1 zugeführt werden. Dabei wird beispielsweise durch Unterbrechung der Takte Ti1 und Tq1 der Regelkreis unterbrochen.

Bei dem in Fig. 2 dargestellten Ausführungsbeispiel ist der gesamte Bereich, welchen die Eigenfrequenz FOrt einnehmen kann, in mehrere Frequenzbereiche FB1 bis FB(n+1) eingeteilt. Jeweils ein Frequenzbereich erstreckt sich von einer Frequenz Fa bis Fb, wobei sich die Bereiche in dem schraffiert dargestellten Teil überlappen. Nach dem Einschalten der Sensoranordnung wird zunächst der Frequenzbereich Fa1 bis Fb1 durchlaufen, dann der Frequenzbereich Fa2 bis Fb2 und danach der Frequenzbereich Fa3 bis Fb3. Erst im Frequenzbereich zwischen Fa4 bis Fb4 wird eine freie Schwingung mit der Frequenz FOrt angeregt. Dies wird mit Hilfe des Zählers 26 (Fig. 1) festgestellt, der die gemessene Frequenz an den Mikrocontroller 27 meldet, worauf der Frequenz-Synthesierer 10 auf diese Frequenz eingestellt wird.

Bei einem Vibrationskreisel, dessen Eigenfrequenz zwischen 13,5 kHz und 14,5 kHz liegen kann, kommt beispielsweise eine Aufteilung in zehn Frequenzbereiche je 100 Hz zuzüglich 35 Hz für die Überlappung in Frage. Für die Zeit, die zum Durchfahren eines Frequenzbereichs benötigt wird, hat sich beispielsweise 10 ms als günstig herausgestellt.

Bei dem Ausführungsbeispiel nach Fig. 3 wurde in einem Abgleichprozess bei der Herstellung der Sensoranordnung die jeweils unter Prüfbedingungen vorhandene Frequenz FOrt gemessen und im EEPROM 28 (Fig. 1) abgelegt. Beim Einschalten der Sensoranordnung und beim Suchen der Eigenfrequenz FOrt brauchen die Exemplarstreuungen der Eigenfrequenz nicht mehr berücksichtigt zu werden. Der Suchvorgang muss daher nur noch Änderungen gegenüber der Eigenfrequenz beim Abgleich berücksichtigen. Dies sind in erster Linie Temperatureinflüsse oder Alterungserscheinungen. Deshalb sind bei dem Ausführungsbeispiel nach Fig. 3 lediglich drei Frequenzbereiche FB1 bis FB3 vorgesehen, welche Änderungen der Eigenfrequenz zwischen F0tmin und F0tmax abdecken.

Bei dem Ausführungsbeispiel nach Fig. 4 werden zusätzlich zur Eigenfrequenz des Vibrationskreisels beim Abgleich auch deren Temperaturkoeffizient und die beim Einschalten herrschende Temperatur berücksichtigt. Damit ist im dargestellten Fall lediglich das Durchfahren jeweils eines Frequenzbereiches erforderlich, dessen Lage in Fig. 4 für eine mittlere Temperatur Rt, für eine Mindesttemperatur tmin und eine Maximaltemperatur tmax dargestellt ist, was jeweils durch die Indizes der Frequenzen F0, Fa und Fb kenntlich gemacht ist. Die schraffierten Flächen stellen jeweils den Fangbereich des Regelkreises (PLL-Schaltung) dar.

## Patentansprüche

1. Verfahren zum Betrieb eines Vibrationskreisels, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird, wobei nach dem Einschalten einer Sensoranordnung mit dem Vibrationskreisel die Frequenz des Erregersignals dadurch eingestellt wird, dass vor Zuführung des Erregersignals der Vibrationskreisel zu einer freien Schwingung angeregt wird, dass die Frequenz der freien Schwingung gemessen wird und dass das Erregersignal mit der gemessenen Frequenz dem Vibrationskreisel zugeführt wird, wobei zur Anregung des Vibrationskreisels von einem zur Anregung dienenden Signal mindestens ein vorgegebener Frequenzbereich durchfahren wird, wonach das Signal abgeschaltet wird und die Frequenz einer sich gebildeten freien Schwingung gemessen wird, **dadurch gekennzeichnet, dass** ein weiterer Frequenzbereich durchfahren wird, wenn sich keine freie Schwingung ausgebildet hat, wobei die Frequenzbereiche derart gewählt sind, dass sie eine zuvor in einem Abgleichprozess bei der Herstellung der Sensoranordnung gemessene und in einem Speicher abgelegte Eigenfrequenz einschließlich deren insbesondere durch Temperatureinflüsse oder Alterungserscheinungen bedingte Änderungen umfassen.

2. Verfahren nach Anspruch 1, **dadurch gekennzeichnet, dass** die Frequenzbereiche derart gewählt sind, dass sie insgesamt alle möglichen Eigenfrequenzen des Vibrationskreisels umfassen.

3. Verfahren nach einem der Ansprüche 1 bis 2, **dadurch gekennzeichnet, dass** sich die Frequenzbereiche überlappen.

4. Verfahren nach Anspruch 1, **dadurch gekennzeichnet, dass** der Frequenzbereich derart gewählt ist, dass er eine Eigenfrequenz des Vibrationskreisels umfasst, deren Wert aus dem gespeicherten Wert, dessen Temperaturabhängigkeit und der beim Einschalten gemessenen Temperatur berechnet wird.

5. Sensoranordnung mit einem Vibrationskreisel, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird, wobei die Sensoranordnung Mittel (24 bis 30) umfasst, die ein schnelles Einschwingen des Regelkreises (11 bis 22) dadurch bewirken, dass nach dem Einschalten der Sensoranordnung (1, 6) die Frequenz des Erregersignals dadurch eingestellt wird, dass vor Zuführung des Erregersignals der Vibrationskreisel (1) zu einer freien Schwingung angeregt wird, dass die Frequenz der freien Schwingung gemessen wird und dass das Erregersignal mit der gemessenen Frequenz dem Vibrationskreisel (1) zugeführt wird, wobei die Sensoranordnung so ausgebildet ist, dass zur Anregung des Vibrationskreisels (1) von einem zur Anregung dienenden Signal mindestens ein vorgegebener Frequenzbereich durchfahren wird, wonach das Signal abgeschaltet wird und die Frequenz einer sich gebildeten freien Schwingung gemessen wird, **dadurch gekennzeichnet, dass** die Sensoranordnung so ausgebildet ist, dass ein weiterer Frequenzbereich durchfahren wird, wenn sich keine freie Schwingung ausgebildet hat, wobei die Frequenzbereiche derart gewählt sind, dass sie eine zuvor in einem Abgleichprozess bei der Herstellung der Sensoranordnung gemessene und in einem Speicher abgelegte Eigenfrequenz einschließlich deren insbesondere durch Temperatureinflüsse oder Alterungserscheinungen bedingte Änderungen umfassen.

6. Sensoranordnung nach Anspruch 5, **dadurch gekennzeichnet, dass** die Mittel eine Frequenzmesseinrichtung (24, 25, 26), einen Mikrocontroller (27) mit einem nicht-flüchtigen Speicher (28) und einen Frequenz-Synthesizer (10) umfassen.

7. Sensoranordnung nach einem der Ansprüche 5 und 6, **dadurch gekennzeichnet, dass** die Frequenzbereiche derart gewählt sind, dass sie insgesamt alle möglichen Eigenfrequenzen des Vibrationskreisels (1) umfassen.

8. Sensoranordnung nach einem der Ansprüche 5 bis 7, **dadurch gekennzeichnet, dass** sich die Frequenzbereiche überlappen.

9. Sensoranordnung nach Anspruch 5, **dadurch gekennzeichnet, dass** der Frequenzbereich derart gewählt ist, dass er eine Eigenfrequenz des Vibrationskreisels (1) umfasst, deren Wert aus dem gespeicherten Wert, dessen Temperaturabhängigkeit und der beim Einschalten gemessenen Temperatur berechnet wird.

## Claims

1. Method for operation of a vibration gyro, which represents a resonator and is part of at least one control loop which excites the vibration gyro by supplying an exciter signal at its natural frequency, in which case an output signal can be tapped off from the vibration gyro, from which output signal the exciter signal is derived by filtering and amplification, wherein, once a sensor arrangement with the vibration gyro has been switched on, the frequency of the exciter signal is set by exciting the vibration gyro to oscillate freely before the exciter signal is supplied, with the frequency of the free oscillation being measured and with the exciter signal being supplied to the vibration gyro at the measured frequency, wherein the vibration gyro is excited by moving a signal that is used for excitation through at least one predetermined frequency range, after which the signal is switched off and the frequency of a free oscillation that is formed is measured **characterized in that** a further frequency range is scanned through if no free oscillation has formed, wherein the frequency ranges are chosen such that they cover a natural frequency that has been measured previously in an adjustment process during the production of the sensor arrangement and stored in a memory, including the changes thereof that are caused in particular by temperature influences or ageing phenomena.

2. Method according to Claim 1, **characterized in that** the frequency ranges are chosen such that, overall, they cover all the possible natural frequencies of the vibration gyro.

3. Method according to either of Claims 1 and 2, **characterized in that** the frequency ranges overlap.

4. Method according to Claim 1, **characterized in that** the frequency range is chosen such that it covers one natural frequency of the vibration gyro whose value is calculated from the stored value, its temperature dependency and the temperature measured on switch on.

5. Sensor arrangement having a vibration gyro which represents a resonator and is part of at least one control loop which excites the vibration gyro by supplying an exciter signal at its natural frequency, in which case an output signal can be tapped off from the vibration gyro, from which output signal the exciter signal is derived by filtering and amplification, wherein the sensor arrangement comprises means (24 to 30) which result in rapid stabilization of the control loop (11 to 22) in such a way that, once the sensor arrangement (1, 6) has been switched on, the frequency of the exciter signal is set such that, before the exciter signal is supplied, the vibration gyro (1) is excited to oscillate freely, with the frequency of the free oscillation being measured and with the exciter signal being supplied to the vibration gyro (1) at the measured frequency, wherein the sensor arrangement is configured such that the vibration gyro (1) is excited by moving a signal, which is used for excitation, through at least one predetermined frequency range, after which the signal is switched off and the frequency of a free oscillation that is formed is measured, **characterized in that** the sensor arrangement is configured such that a further frequency range is scanned through if no free oscillation has formed, wherein the frequency ranges are chosen such that they cover a natural frequency that has been measured previously in an adjustment process during the production of the sensor arrangement and stored in a memory, including the changes thereof that are caused in particular by temperature influences or ageing phenomena.

6. Sensor arrangement according to Claim 5, **characterized in that** the means comprise a frequency measurement device (24, 25, 26), a microcontroller (27) with a non-volatile memory (28), and a frequency synthesizer (10).

7. Sensor arrangement according to either of Claims 5 and 6, **characterized in that** the frequency ranges are chosen such that, overall, they cover all the possible natural frequencies of the vibration gyro (1).

8. Sensor arrangement according to one of Claims 5 to 7, **characterized in that** the frequency ranges overlap.

9. Sensor arrangement according to Claim 5, **characterized in that** the frequency range is chosen such that it covers one natural frequency of the vibration gyro (1) whose value is calculated from the stored value, its temperature dependency and the temperature measured on switch on.

## Revendications

1. Procédé d'utilisation d'un gyroscope vibratoire qui constitue un résonateur et fait partie d'au moins une boucle de régulation qui excite le gyroscope vibratoire en lui apportant un signal d'excitation à sa fréquence propre,
un signal de sortie à partir duquel le signal d'excitation est dérivé par filtration et amplification pouvant être prélevé sur le gyroscope vibratoire,
la fréquence du signal d'excitation étant établie après le raccordement d'un ensemble de capteur au gyroscope vibratoire en excitant le gyroscope vibratoire à sa vibration propre avant l'amenée du signal d'excitation, en mesurant la fréquence de la vibration libre et en apportant au gyroscope vibratoire le signal d'excitation à la fréquence qui a été mesurée,
au moins une plage prédéterminée de fréquences étant balayée par un signal servant à l'excitation en vue de l'excitation du gyroscope vibratoire, suite à quoi le signal est débranché et la fréquence de la vibration libre qui s'établit est mesurée,
**caractérisé en ce que**
les plages de fréquences sont sélectionnées de telle sorte qu'elles comprennent une fréquence propre, y compris ses modifications provoquées notamment par l'effet de la température ou des phénomènes de vieillissement, mesurée précédemment dans une opération d'égalisation lors de la fabrication de l'ensemble de capteur et conservée dans une mémoire.

2. Procédé selon la revendication 1, **caractérisé en ce que** les plages de fréquences sont sélectionnées de manière à comporter globalement toutes les fréquences propres possibles du gyroscope vibratoire.

3. Procédé selon l'une des revendications 1 et 2, **caractérisé en ce que** les plages de fréquences se superposent.

4. Procédé selon la revendication 1, **caractérisé en ce que** la plage de fréquences sélectionnée comporte une fréquence propre du gyroscope vibratoire dont la valeur est calculée à partir de la valeur conservée en mémoire dont la dépendance vis-à-vis de la température et la température lors du branchement ont été mesurées.

5. Ensemble de capteur présentant un gyroscope vibratoire qui constitue un résonateur et fait partie d'au moins une boucle de régulation qui excite le gyroscope vibratoire en lui apportant un signal d'excitation à sa fréquence propre,
un signal de sortie à partir duquel le signa l'excitation est dérivé par filtration et amplification pouvant être prélevé sur le gyroscope vibratoire,
l'ensemble de capteur comportant des moyens (24 à 30) qui ont pour effet une vibration rapide de la boucle de régulation (11 à 22) en établissant la fréquence du signal d'excitation après le raccordement d'un ensemble de capteur au gyroscope vibratoire en excitant le gyroscope vibratoire à sa vibration propre avant l'amenée du signal d'excitation, en mesurant la fréquence de la vibration libre et en apportant au gyroscope vibratoire le signal d'excitation à la fréquence qui a été mesurée,
l'ensemble de capteur étant configuré de telle sorte qu'au moins une plage prédéterminée de fréquences est balayée par un signal servant à l'excitation en vue de l'excitation du gyroscope vibratoire, suite à quoi le signal est débranché et la fréquence de la vibration libre qui s'établit est mesurée,
**caractérisé en ce que**
l'ensemble de capteur est configuré de telle sorte qu'une autre plage de fréquences est balayée si aucune vibration libre ne s'est établie, les plages de fréquences étant sélectionnées de telle sorte qu'elles comprennent une fréquence propre, y compris ses modifications provoquées notamment par l'effet de la température ou des phénomènes de vieillissement, mesurée précédemment dans une opération d'égalisation lors de la fabrication de l'ensemble de capteur et conservée dans une mémoire.

6. Ensemble de capteur selon la revendication 5, **caractérisé en ce que** les moyens comprennent un dispositif (24, 25, 26) de mesure de fréquences, un microcontrôleur (27) doté d'une mémoire non volatile (28) et un synthétiseur de fréquences (10).

7. Ensemble de capteur selon les revendications 5 et 6, **caractérisé en ce que** les plages de fréquences sont sélectionnées de manière à comporter globalement toutes les fréquences propres possibles du gyroscope vibratoire (1).

8. Ensemble de capteur selon l'une des revendications 5 à 7, **caractérisé en ce que** les plages de fréquences se superposent.

9. Ensemble de capteur selon la revendication 5, **caractérisé en ce que** la plage de fréquences sélectionnée comporte une fréquence propre du gyroscope vibratoire dont la valeur est calculée à partir de la valeur conservée en mémoire dont la dépendance vis-à-vis de la température et la température lors du branchement ont été mesurées.
